# EUROPÄISCHE PATENTSCHRIFT

(11) **EP 2 965 830 B1**
(45) Veröffentlichungstag und Bekanntmachung des Hinweises auf die Patenterteilung: **13.12.2017**
(21) Anmeldenummer: 15175586.5
(22) Anmeldetag: 07.07.2015
(51) Int. Cl.: B21D 22/02, B21D 53/88, B60G 21/05

(54) **VERFAHREN ZUM HERSTELLEN EINES TORSIONSPROFILS AUS EINEM ROHRFÖRMIGEN HOHLPROFIL**
METHOD FOR PRODUCING A TORSION PROFILE FROM A TUBULAR HOLLOW PROFILE
PROCEDE DE FABRICATION D'UN ESSIEU DE TORSION A PARTIR D'UN PROFIL CREUX EN FORME DE TUBE

(30) Priorität: 07.07.2014 DE 102014109453
(43) Veröffentlichungstag der Anmeldung: 13.01.2016
(73) Patentinhaber: Benteler Automobiltechnik GmbH, 33102 Paderborn (DE)
(72) Erfinder: Claussen, Lars, 33175 Bad Lippspringe (DE); Hutabarat, Goddy, 33102 Paderborn (DE); Krull, Jan, 33189 Schlangen (DE)
(74) Vertreter: Sprenger, Gerrit Lars Eike

(56) Entgegenhaltungen:
- WO-A1-2009/014396
- WO-A1-2010/043036
- WO-A1-2013/185212
- DE-A1- 10 054 692
- FR-A1- 2 891 480
- JP-A- 2008 169 455
- US-A1- 2004 256 828
- US-A1- 2006 059 974

## Beschreibung

Die Erfindung betrifft ein Verfahren zum Herstellen eines Torsionsprofils aus einem rohrförmigen Hohlprofil.

Aus der EP 0 752 332B1 und der DE 196 53 959C1 sind Verfahren bekannt, bei denen aus einem rohrförmigen Hohlprofil ein Torsionsprofil hergestellt wird. Bei diesem Verfahren wird ein rohrförmiges Hohlprofil über den wesentlichen Teil seiner Länge zu einem im Querschnitt U- oder V-förmigen gemuldeten Torsionsabschnitt umgeformt. Dabei kommen die Wände des Torsionsprofils in den im Querschnitt U- oder V-förmig gemuldeten Torsionsabschnitts derart aneinander zum Liegen, dass sie über den gesamten Torsionsabschnitt miteinander in Kontakt sind. Derartig hergestellte Torsionsprofile weisen zwar eine, insbesondere für Anwendungen im Automotivbereich, ausreichende Torsionsfestigkeit auf, die insbesondere in sicherheitsrelevanten Bereichen im Automotivbereich für derartige Torsionsprofile notwendig ist. Allerdings wohnt derartigen Torsionsprofilen die unangenehme Eigenschaft inne, dass bei Torsionsbeanspruchungen unter Umständen unerwünschte Geräusche erzeugt werden, da die Innen- und Außenwände des Torsionsprofils im Torsionsbereich aneinander reiben. Diese Geräusche können dabei in einem für das menschliche Gehör unangenehmen gegebenenfalls sogar schmerzenden Frequenzbereich liegen, sodass derartige Torsionsprofile für den komfortablen Betrieb eines Kraftfahrzeuges nicht geeignet sind.

Aus der US 2006/0059974 A1 ist ein Verfahren zum Herstellen eines Torsionsprofils aus einem rohrförmigen Hohlprofil bekannt, bei dem ein endseitiges Fixieren eines Hohlprofils in einer Verformungsmatrize mittels jeweils eines sich bis zu dem Torsionsbereich des herzustellenden Torsionsprofils erstreckenden verjüngenden Domes stattfindet. Nach dem Fixieren des Hohlprofils über seine Längserstreckung in der Verformungsmatrize erfolgt ein Verformen des Hohlprofils über seine Längserstreckung in dem Torsionsbereich des herzustellenden Torsionsprofils mittles eines Schwertes unter Verringerung der Querschnittsfläche des Hohlprofils im Torsionsbereich des herzustellenden Torsionsprofils. Nach dem Entfernen des Schwertes und der Dornen kann das nun aus dem Hohlprofil gefertigte Torsionsprofil aus der Verformungsmatrize entnommen werden. Allerdings kann auch bei derartig hergestellten Torsionsprofilen nicht die unangenehme Eigenschaft ausgeschlossen werden, dass bei Torsionsbeanspruchungen unter Umständen unerwünschte Geräusche erzeugt werden, da die Innen- und Außenwände des Torsionsprofils im Torsionsbereich aneinander reiben. Diese Geräusche können dabei in einem für das menschliche Gehör unangenehmen gegebenenfalls sogar schmerzenden Frequenzbereich liegen, sodass derartige Torsionsprofile für den komfortablen Betrieb eines Kraftfahrzeuges nicht geeignet sind.
Aus der WO 2010/043036 A1 sind Torsionsprofile bekannt, bei denen die Wandstärke des Torsionsprofils in dessen Torsionsbereich unterschiedlich ausgebildet ist, damit es lokal besser an Stressanforderungen anpassbar ist. Zwar sind. Zwar sind bei den dortigen Torsionsprofilen Innen- und Außenwände partiell beanstandet. Allerdings kann auch bei diesen Torsionsprofilen nicht ausgeschlossen werden, dass Inne- und Außenwände dieser Torsionsprofile bei Torsionsbeanspruchung unter Geräuschentwicklung aneinander reiben.
Es ist daher Aufgabe der Erfindung, ein Verfahren zum Herstellen eines Torsionsprofils aus einem rohrförmigen Hohlprofil sowie ein Torsionsprofil zur Verfügung zu stellen, bei dem eine unerwünschte Geräuschbildung nicht auftritt.
Verfahrensmäßig wird diese Aufgabe gelöst durch ein Verfahren mit allen Merkmalen des Patentanspruchs 1. Vorteilhafte Ausgestaltungen der Erfindung finden sich in den Unteransprüchen.
Das erfindungsgemäße Verfahren zum Herstellen eines Torsionsprofils aus einem rohrförmigen Hohlprofil, wobei das Torsionsprofil über seine gesamte Länge mit beabstandeten Wänden versehen ist, weist dabei folgende Verfahrensschritte auf:
a) Einlegen des rohrförmigen Hohlprofils in eine erste Verformungsmatrize,
b) Endseitiges Fixieren des rohrförmigen Hohlprofils in der ersten Verformungsmatrize mittels jeweils eines sich in einen Torsionsbereich erstreckenden verjüngenden ersten Domes,
c) Fixieren des rohrförmigen Hohlprofils über seine Längserstreckung in der ersten Verformungsmatrize,
d) Verformen des rohrförmigen Hohlprofils über seine Längserstreckung in den Torsionsbereich mittels eines ersten Schwertes unter Verringerung der Rohrquerschnittsfläche im Torsionsbereich,
e) Entfernen des ersten Schwertes und der ersten Dorne,
f) Endseitiges Fixieren des umgeformten Hohlprofils (7) in der zweiten Verformungsmatrize (8) mittels jeweils eines sich bis zu dem Torsionsbereich (3) erstreckenden verjüngenden zweiten Domes (9, 10),
g) Fixieren des umgeformten Hohlprofils (7) über seine Längserstreckung in der zweiten Verformungsmatrize (8),
h) Verformen des umgeformten Hohlprofils (7) über seine Längserstreckung in dem Torsionsbereich (3) mittles eines zweiten Schwertes (11) unter Verringerung der Querschnittsfläche des umgeformten Hohlprofils (7) im Torsionsbereich,
i) Entfernen des zweiten Schwertes (11) und der zweiten Dorne (9, 10) und
j) Entnahme des weiter umgeformten Hohlprofils (12).

Bevor das Verformen des rohrförmigen Hohlprofils zum Torsionsprofil erfolgen kann, wird es in die erste Verformungsmatrize eingelegt und endseitig jeweils mittels eines sich in einen Torsionsbereich erstreckenden verjüngenden Dornes fixiert, wobei diese Dorne vorzugsweise auf entsprechenden Haltern angeordnet sind. Damit das rohrförmige Hohlprofil vor seiner Verformung sicher in der Verformungsmatrize angeordnet ist, wird es vorzugsweise auch noch über seine Längserstreckung mit entsprechenden Nachführelementen beziehungsweise Haltern fixiert.

Das erfindungsgemäße Verfahren zeichnet sich nun dadurch aus, dass das rohrförmige Hohlprofil über seine Längserstreckung in dem Torsionsbereich mittels des ersten Schwertes unter Verringerung der Rohrquerschnittsfläche im Torsionsbereich solange verformt werden kann, bis ein mittels des Schwertes muldenförmig verformte Torsionsbereich mit seiner Innenwand an dem ersten Dorn zum Liegen kommt, während die Außenwand des muldenförmig verformten Torsionsbereiches einerseits die Verformungsmatrize und andererseits ebenfalls den ersten Dorn kontaktiert. Nachdem das rohrförmige Hohlprofil derart verformt wurde, werden sowohl das erste Schwert als auch die ersten Dorne von dem umgeformten Hohlprofil entfernt und das umgeformte Hohlprofil aus der ersten Verformungsmatrize entnommen. Hierdurch ist bereits nun ein Torsionsprofil in Form des umgeformten Hohlprofils entstanden, bei dem Innen- und Außenwände des Torsionsprofils nicht nur im Endbereich, sondern auch im Torsionsbereich voneinander beabstandet sind.

Durch das erfindungsgemäße Verfahren ist nunmehr bereits ein Torsionsprofil hergestellt, welches die gewünschten Torsionseigenschaften im Torsionsbereich aufweist. Erfindungsgemäß sind dabei die Innen- und Außenwände des Torsionsprofils im Torsionsbereich beabstandet, sodass bei einer Torsionsbeanspruchung diese nicht aneinander reiben oder abgleiten können und somit eine unerwünschte Geräuschbildung sicher vermieden ist. Zwischen den Innen- und Außenwände des Torsionsprofils im Torsionsbereich ist dabei ein Spaltmass von 5mm bis 50 mm, bevorzugt von 10 mm bis 20 mm erzeugbar.

Die für die Herstellung derartiger Torsionsprofile verwendeten rohrförmigen Hohlprofile bestehen dabei aus einem Metall, vorzugsweise aus einem Stahl, wobei diese rohrförmigen Hohlprofile in verschiedenen Schweißprozessen geschweißt sein können, wie beispielsweise HF-Schweißen, Laserschweißen, Laserhybridschweißen, Plasmaschweißen, MAG-Schweißen oder dergleichen. Allerdings können natürlich auch gezogene Rohre als Hohlprofile verwendet werden. Ferner kann das rohrförmige Hohlprofil unverzinkt oder zum Korrosionsschutz verzinkt und über seine Längserstreckung auch gebogen sein.

Mithilfe der ersten Dorne ist es auch möglich, die Enden des Torsionsprofils entsprechend seiner weiteren Verarbeitung auszuformen. Dazu müssen nur die ersten Dorne im Endbereich entsprechend geformt sein, sodass diese Form beim Einführen der ersten Dorne in das rohrförmige Hohlprofil auf dessen Enden übertragen werden kann. Zusätzlich ist es auch möglich, die Enden des Hohlprofils beim Umformen des Rohres zu formen. Insbesondere können dabei auch Sicken eingeprägt und Löcher gestanzt oder auch andere dergleichen Elemente eingeformt werden.

Nach dem erfindungsgemäßen Verfahren wird das nunmehr bereits vorliegende umgeformte Hohlprofil nochmals verformt. Dazu wird das umgeformte Hohlprofil in eine zweite Verformungsmatrize eingelegt und wiederum endseitig fixiert. Sowie auch über seine Längserstreckung in der ersten Verformungsmatrize fixiert. Die endseitige Fixierung des umgeformten Hohlprofils in der zweiten Verformungsmatrize erfolgt dabei allerdings mittels jeweils eines sich bis zu dem Torsionsbereich erstreckenden verjüngenden zweiten Dorns.

Auch hierbei ist es mithilfe der zweiten Dorne möglich, die Enden des Torsionsprofils entsprechend seiner weiteren Verarbeitung auszuformen. Dazu müssen nur die zweiten Dorne im Endbereich entsprechend geformt sein, sodass diese Form beim Einführen der der zweiten Dorne in das umgeformte Hohlprofil auf dessen Enden übertragen wird.

Das Verformen des umgeformten Hohlprofils über seine Längserstreckung im Torsionsbereich erfolgt nun mittels eines zweiten Schwertes unter einer weiteren Verringerung der Querschnittsfläche des umgeformten Hohlprofils im Torsionsbereich. Das Verformen des umgeformten Hohlprofils kann dabei solange erfolgen, bis die Innenwände des Torsionsprofils im Bereich der Verjüngung der zweiten Dorne zum Anliegen kommen. Dabei können mittels der Form der Verjüngung die zweiten Dorne in einen vorbestimmten Abstand der Innenwände und Außenwände zueinander im Bereich des Torsionsbereichs eingestellt werden. Die Form der Verjüngung des zweiten Domes ist somit für den Abstand der Innen- und Außenwände des Torsionsprofils im Torsionsbereich und somit für eine sich dort bildenden Luftspalt ausschlaggebend. Nachdem das umgeformte Hohlprofil nunmehr derart weiterverformt wurde, werden das zweite Schwert und die zweiten Dorne nunmehr vom weiter umgeformten Hohlprofil entfernt und das weiter umgeformte Hohlprofil aus der zweiten Verformungsmatrize entnommen.

Mittels dieser weiteren Verfahrensschritten kann nunmehr ein vorbestimmter Abstand der Innen- und Außenwände des herzustellenden Torsionsprofils sehr exakt auf bis zu 1 mm eingestellt werden. Dies bedeutet, dass durch eine Verwendung unterschiedlicher zweiter Dorne mit unterschiedlichen Verjüngungen, die Abstände zwischen Innen- und Außenwänden des Torsionsprofils variiert werden können. Somit können auf ein und derselben Herstellungsanlage durch Austausch der zweiten Dorne unterschiedliche Torsionsprofile hergestellt werden.

Nach einer besonders vorteilhaften Ausgestaltung des erfindungsgemäßen Verfahrens werden im Querschnitt runde, ovale oder dergleichen geschlossene rohrförmige Hohlprofile als Ausgangsprofile verwendet. Grundsätzlich ist es nämlich nur notwendig, dass es sich um ein geschlossenes Hohlprofil handelt, das als Ausgangsprofil verwendet wird. Somit sind mit dem erfindungsgemäßen Verfahren eine Vielzahl unterschiedlicher Torsionsprofile für unterschiedlichste Anwendungen herstellbar. Denkbar ist aber auch, dass das rohrförmige Hohlprofil in seinen Endbereichen einen anderen Querschnitt und/oder Umfang aufweist, als in dem Bereich, der zu dem Torsionsbereich des Torsionsprofils umgeformt wird.

Besonders vorteilhaft ist es allerdings, insbesondere für Anwendungen im Automotivbereich, dass das rohrförmige Hohlprofil zu einem im Torsionsbereich im Querschnitt V-förmig U-förmig oder dergleichen muldenförmig geformten Profil umgeformt wird. Derartige Profile haben sich nämlich für Anwendungen im Automotivbereich, insbesondere auch für sicherheitsrelevante Anwendungen, als besonders geeignet herausgestellt.

Um die Torsionssteifigkeit des herzustellenden Torsionsprofils zu erhöhen, können dabei sowohl die ersten als auch die zweiten Dorne, die in dem erfindungsgemäßen Verfahren verwendet werden, zumindest abschnittsweise mit Sicken versehen sein, die vorzugsweise mit entsprechenden Vorsprüngen der Schwerter beziehungsweise der Verformungsmatrizen korrespondieren.

Nach einem weiteren vorteilhaften Gedanken des erfindungsgemäßen Verfahrens werden erste beziehungsweise zweite Verformungsmatrizen verwendet, die als Untergesenke ausgebildet sind, wobei vorzugsweise die erste und zweite Verformungsmatrize auch gleich ausgebildet sein können. Derartige Untergesenke haben sich zur Herstellung von Profilen beim Verformen bereits bewährt und wirken besonders gut mit den verwendeten Schwertern zusammen, sodass damit die im Torsionsbereich muldenförmig ausgebildeten Torsionsprofile in einfacher Weise und kostengünstig hergestellt werden können. Um die Werkzeugkosten weiter zu minimieren ist es dabei besonders vorteilhaft, wenn eine einzige als Untergesenk ausgebildete Verformungsmatrize als erste und zweite Verformungsmatrize verwendet wird.

Damit die Torsionsprofile im Torsionsbereich besonders gleichförmig ausgebildet sind, hat es sich bewährt, dass die ersten Dorne nach dem Einbringen in das rohrförmige Hohlprofil sich bis zu einem Drittel, bevorzugt bis zur Mitte in das rohrförmigen Hohlprofils erstrecken und besonders bevorzugt an den Endbereichen des rohrförmigen Hohlprofils an Haltern gehalten sind. Durch diese Maßnahme lassen sich zum einen die ersten Dorne exakt in dem rohrförmigen Hohlprofil positionieren, während zum anderen durch das Erstrecken der sich verjüngenden ersten Dorne bis zu einem Drittel vorzugsweise bis zur Mitte in das rohrförmigen Hohlprofils gewährleistet ist, dass das rohrförmige Hohlprofil im Torsionsbereich besonders gleichmäßig verformt wird.

Um abermals Werkzeugkosten zu minimieren und die Herstellung eines Torsionsprofils zu beschleunigen, hat es sich als vorteilhaft erwiesen, das als erstes und zweite Schwert das gleiche Schwert verwendet wird. Insbesondere wenn auch die erste und zweite Verformungsmatrize als eine einzige Verformungsmatrize ausgebildet sind, können die Verformung des rohrförmigen Hohlprofils und die weitere Verformung des umgeformten Hohlprofils in einer Verformungsmatrize und mit den gleichen Schwertern durchgeführt werden.

Nach einem weiteren vorteilhaften Gedanken des erfindungsgemäßen Verfahrens werden Bereiche des umgeformten Hohlprofils, welche beim weiteren Verformen selbst keine weitere Verformung mehr erfahren, durch Nachführelemente nachgeführt. Dies bedeutet nicht nur eine schonende Behandlung dieser Bereiche, vielmehr ist dadurch auch gewährleistet, dass durch das gezielte Nachführen die hergestellten Torsionsprofile nur sehr geringe Toleranzabweichungen aufweisen.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

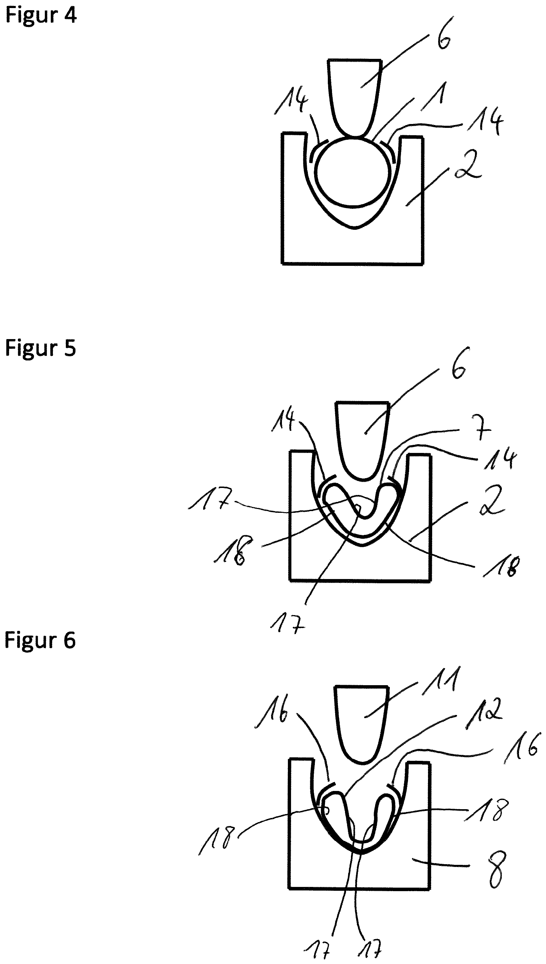

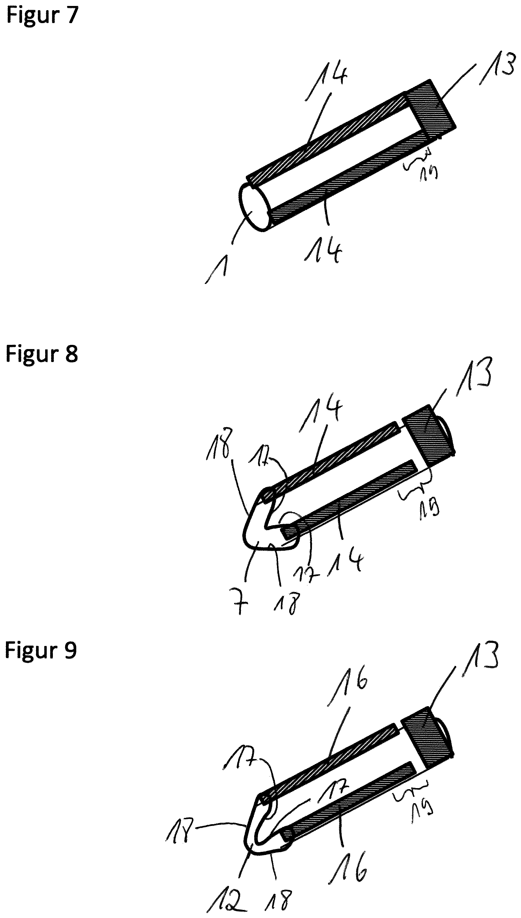

Es zeigen:
- Figur 1:: eine erste Längsschnittdarstellung während der Herstellung eines Ausführungsbeispiels eines Torsionsprofils,
- Figur 2:: eine zweite Längsschnittdarstellung während der Herstellung eines Ausführungsbeispiels eines Torsionsprofils,
- Figur 3:: eine dritte Längsschnittdarstellung während der Herstellung eines Ausführungsbeispiels eines Torsionsprofils,
- Figur 4:: Schnittdarstellung der Figur 1 entlang der Schnittfläche A-A,
- Figur 5:: Schnittdarstellung der Figur 2 entlang der Schnittfläche B-B
- Figur 6:: Schnittdarstellung der Figur 3 entlang der Schnittfläche C-C,
- Figur 7:: Draufsicht auf eine Vorrichtung zur Herstellung eines Torsionsprofils während des in Figur 1 dargestellten Herstellungsschrittes in einem Teilbereich,
- Figur 8:: Draufsicht auf eine Vorrichtung zur Herstellung eines Torsionsprofils während des in Figur 2 dargestellten Herstellungsschrittes in einem Teilbereich und
- Figur 9:: Draufsicht auf eine Vorrichtung zur Herstellung eines Torsionsprofils während des in Figur 3 dargestellten Herstellungsschrittes in einem Teilbereich.

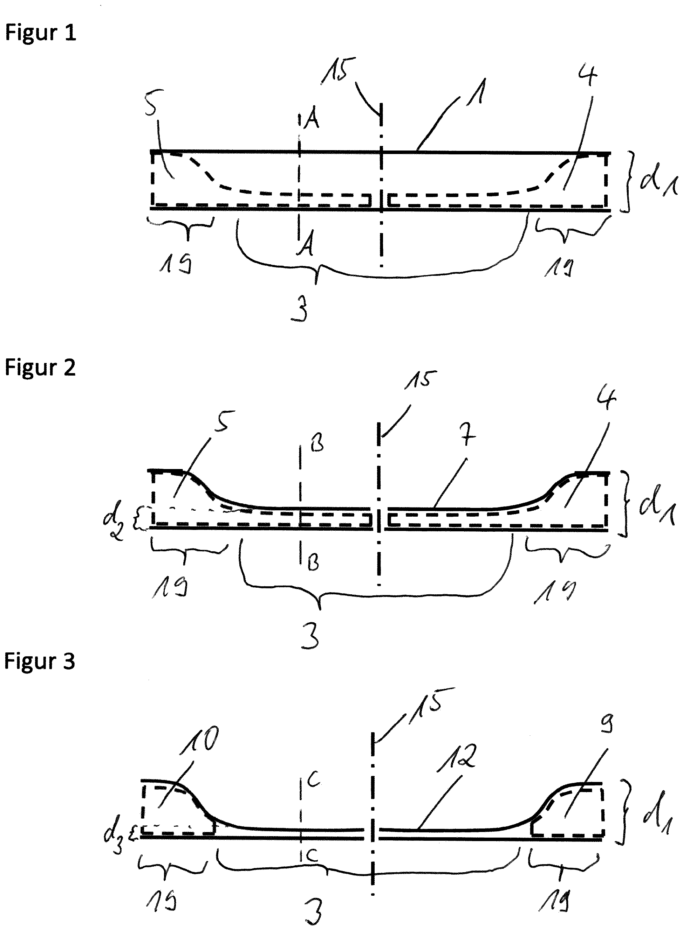

In den Figuren 1 bis 9 sind unterschiedliche Darstellungen während der Herstellung eines Ausführungsbeispiels eines Torsionsprofils mit dem erfindungsgemäßen Verfahren zur Herstellung eines Torsionsprofils aus einem rohrförmigen Hohlprofil 1 dargestellt.
Dabei zeigen die Figuren 1, 4 und 7 die gleiche Anordnung in unterschiedlichen Darstellungen, in der das rohrförmige Hohlprofil 1 bereits in einer als Untergesenk ausgebildete Verformungsmatrize 2 angeordnet ist. Dabei ist insbesondere in Figur 1 zu erkennen, dass auch bereits erste Dorne 4, 5 an den Enden 19 des rohrförmigen Hohlprofils in dasselbe eingeführt sind. Die ersten Dorne 4, 5 sind dabei zur Mitte des rohrförmigen Hohlprofils 1, welche durch die Mittelachse 15 in Figur 1 dargestellt ist, sich verjüngend ausgebildet. Die ersten Dorne 4, 5 erstrecken sich dabei jeweils fast bis zur Mitte des rohrförmigen Hohlkörpers 1. Der rohrförmige Hohlkörper 1 weist in diesem Ausführungsbeispiel einen kreisrunden Querschnitt auf, sodass die Wände des rohrförmigen Hohlprofils 1 einen Ausgangsabstand d₁ aufweisen.
In der Querschnittdarstellung gemäß Figur 4 ist nunmehr zu erkennen, dass das rohrförmige Hohlprofil 1 vor seinem Verformen in die als Untergesenk ausgebildete Verformungsmatrize 2 eingelegt ist und über seine Längserstreckung durch die Nachführelemente 14, die auch gleichzeitig als Halter ausgebildet sind, in der Verformungsmatrize 2 über seine gesamte Längserstreckung sicher fixiert ist. Endseitig ist das rohrförmige Hohlprofil 1 durch die ersten Dorne 4, 5 fixiert. In Figur 7 sind zudem Halter 13 zu erkennen sind, welche das Hohlprofil 1 in seinen Endbereichen 19 während des Verformens niederhalten.
In Figur 4 ist weiterhin ein Schwert 6 dargestellt, mittels welchem das rohrförmige Hohlprofil 1 nachfolgend durch ein Niederdrücken des Schwertes in die Verformungsmatrize 2 verformt wird. Hierdurch wird ein muldenförmiges Profil im Torsionsbereich 3 erzeugt.

Figur 7 zeigt nunmehr einen Teilbereich einer Vorrichtung zur Herstellung eines Torsionsprofils in einer Draufsicht, wobei allerdings zur besseren Kenntlichmachung des Querschnittes des rohrförmigen Hohlprofils nur eine Hälfte dargestellt ist. Deutlich zu erkennen sind hierbei die Niederhalteelemente 14, die sich in diesem Ausführungsbeispiel über die Längserstreckung des gesamten rohrförmigen Hohlkörpers 1 erstrecken. Deutlich zu erkennen ist auch der Halter 13, der im Endbereich 19 des rohrförmigen Hohlkörpers 1 diesem beim Verformen niederhält.
Die Figuren 2, 5 und 8 zeigen nunmehr den rohrförmigen Hohlkörper 1 nach dessen Umformung zu dem umgeformten Hohlprofil 7. Wie insbesondere der Figur 2 zu entnehmen ist, wurde das Hohlprofil 1 derart verformt, dass das umgeformte Hohlprofil 7 im Torsionsbereich 3 an den ersten Dorne 4 und 5 zum Liegen kommt. Dabei weisen die ersten Dorne 4 und 5 im Bereich des Torsionsbereiches 3 eine deutlich geringere Dicke auf als im Endbereich 19 des umgeformten Hohlprofils 7. Im Endbereich 19 verjüngen sich daher die ersten Dorne 4 und 5, bis sie im Torsionsbereich 3 wieder eine nahezu konstante Dicke einnehmen.
Figur 5 zeigt nunmehr eine Schnittdarstellung entlang der Schnittfläche B-B der Figur 3, wobei hier zusätzlich noch das Schwert 6 dargestellt ist. Deutlich zu erkennen ist hierbei bereits, dass sich das ursprünglich rohrförmige Hohlprofil 1 der Figuren 1, 4 und 7 im Torsionsbereich 3 zu einem im Wesentlichen V-förmigen umgeformten Hohlprofil 7 verformt hat, wobei dieses Innenwände 17 und Außenwände 18 aufweist, die im Bereich der Mulde mit einem Abstand d₂ beabstandet sind. Entlang der Außenwände 18 und Innenwände 17 in ihrer Erstreckung zu den als Halter ausgebildeten Nachführelementen 14 kann sich der Abstand der Außenwände 18 zu den Innenwänden 17 auch verändern, insbesondere vergrößern, d.h., dass dieser Abstand nicht konstant den Wert d₂ haben muss.
Besonders deutlich ist die V-förmige Ausgestaltung des umgeformten Hohlprofils 7 auch in der Figur 8 zu erkennen.

Auch wenn das umgeformte Hohlprofil 7 der Figuren 2, 5 und 8 bereits die gewünschten Torsionseigenschaften aufweist, kann in einem weiteren Verfahrensschritt im Torsionsbereich 3 nunmehr der gewünschte Abstand d₃ der Außenwände 18 zu den Innenwänden 17 im Bereich der Mulde exakt eingestellt werden. Wie dies geschieht ist nunmehr den Darstellungen der Figuren 3, 6 und 9 zu entnehmen. Dazu wird nämlich das umgeformte Hohlprofil 7 in einer ebenfalls als Untergesenk ausgebildeten Verformungsmatrize angeordnet und endseitig an den Endbereichen 19 mittels zweiter Dorne 9, 10, fixiert. Über die Längserstreckung sind auch bei der zweiten Verformungsmatrize 8 zum Fixieren als Halter ausgebildete Niederhalteelemente 16 angeordnet. Die zweiten Dorne 9, 10 sind nunmehr derart ausgebildet, dass sie sich zwar verjüngen, aber nur im Endbereich 19 und nicht in den Torsionsbereich 3 hinein. In anderen, hier nicht gezeigten Ausführungsbeispielen ist es auch möglich, dass sich die zweiten Dorne 9, 10 bis in den Torsionsbereich 3 hineinerstrecken. Die Dornen 9, 10 dienen dann dabei dazu das Rohrende zu kalibrieren und definieren ferner die Endposition des zweiten Schwertes 11 und somit auch die Dimension des Spaltes zwischen den Außenwänden 18 und den Innenwänden 17 im Bereich der Mulde beziehungsweise des Abstandes d₃.

Wie insbesondere der Figur 6 zu entnehmen ist, wird das umgeformte Hohlprofil 7 zu dem weiter umgeformten Hohlprofil 12 umgeformt, in dem ein zweites Schwert 11 in die als Untergesenk ausgebildete zweite Verformungsmatrize 8 herabgesenkt wird und dabei das umgeformte Hohlprofil 7 im Torsionsbereich 3 zu dem weiter umgeformten Hohlprofil 12 verformt, welches genau dann erreicht ist, wenn das weiter umgeformte Hohlprofil 12 im Endbereich 19 an der Verjüngung der zweiten Dorne 9 und 10 zum Liegen kommt. Genau dann ist nämlich der gewünschte Abstand d₃ in der Mulde des weiter umgeformten Hohlprofils 12 eingestellt. Während dieses Umformungsprozesses können die oberen Bereiche des weiter umgeformten Hohlprofils 12 mittels der Niederhalteelemente nachgeführt werden, sodass dort eine besonders schonende Bearbeitung während des Umformens erfolgt.

Wie insbesondere auch der Figur 6 zu entnehmen ist, ist bei dem weiter umgeformten Hohlprofil 12 der Abstand der Innenwände 17 zu den Außenwänden 18 im oberen Bereich größer als im Bereich der Mulde, wo dieser Abstand den gewünschten Abstand d₃ eingenommen hat.

Nachdem die Umformung des ursprünglich rohrförmigen Hohlprofils 1 zu dem weiter umgeformten Hohlprofil 12 abgeschlossen ist, wird nunmehr das zweite Schwert 11 aus der zweiten Verformungsmatrize 8 herausgefahren und die zweiten Dorne 9, 10 ebenfalls aus dem weiter umgeformten Hohlprofil 12 herausgezogen. Nunmehr kann das weiter umgeformte Hohlprofil 12 als fertiges Torsionsprofil aus der zweiten Verformungsmatrize 8 entnommen werden und der weiteren Verwendung beziehungsweise Verarbeitung zugeführt werden.

Angemerkt sei hierbei noch, dass die Verformung des ursprünglichen rohrförmigen Hohlprofils 1 und des umgeformten Hohlprofils 7 beim Verfahren des jeweiligen Schwertes 6, 11 in die jeweilige Verformungsmatrize 2, 8 abgestreckt und damit kalt verfestigt wird. Dadurch kommt es nach der Entnahme des umgeformten Hohlprofils 7 beziehungsweise des weiter umgeformten Hohlprofils 12 aus den Werkzeugmatrizen 2, 8 nur zu einem geringen Rücksprung, sodass die erforderlichen Abstände d₂ und d₃ sehr exakt hergestellt werden können.

### Bezugszeichenliste

- 1: rohrförmiges Hohlprofil
- 2: erste Verformungsmatrize
- 3: Torsionsbereich
- 4: erster Dorn
- 5: erster Dorn
- 6: erstes Schwert
- 7: umgeformtes Hohlprofil
- 8: zweite Verformungsmatrize
- 9: zweiter Dorn
- 10: zweiter Dorn
- 11: zweites Schwert
- 12: weiter umgeformten Hohlprofil
- 13: Halter
- 14: Niederhalteelement
- 15: Mittelachse
- 16: Nachführelement
- 17: Innenwand
- 18: Außenwand
- 19: Endbereich
- A-A: Schnittfläche
- B-B: Schnittfläche
- C-C: Schnittfläche
- d₁: Ausgangsabstand
- d₂: Abstand
- d₃: Abstand

## Patentansprüche

1. Verfahren zum Herstellen eines Torsionsprofils aus einem rohrförmigen Hohlprofil (1), wobei das Torsionsprofil über seine gesamte Länge mit beabstandeten Wänden versehenen ist, mit folgenden Verfahrensschritten:
a) Einlegen des rohrförmigen Hohlprofils (1) in eine ersten Verformungsmatrize (2),
b) Endseitiges Positionieren des rohrförmigen Hohlprofils (1) in der ersten Verformungsmatrize (2) mittels jeweils eines sich in einen Torsionsbereich (3) erstreckenden verjüngenden ersten Domes (4, 5),
c) Positionieren des rohrförmigen Hohlprofils (1) über seine Längserstreckung in der ersten Verformungsmatrize (2),
d) Verformen des rohrförmigen Hohlprofils (2) über seine Längserstreckung in dem Torsionsbereich (3) mittles eines ersten Schwertes (6) unter Verringerung der Rohrquerschnittsfläche im Torsionsbereich (3),
e) Entfernen des ersten Schwertes (6) und der ersten Dorne (4, 5),
f) Endseitiges Fixieren des umgeformten Hohlprofils (7) in der zweiten Verformungsmatrize (8) mittels jeweils eines sich bis zu dem Torsionsbereich (3) erstreckenden verjüngenden zweiten Dornes (9, 10),
g) Fixieren des umgeformten Hohlprofils (7) über seine Längserstreckung in der zweiten Verformungsmatrize (8),
h) Verformen des umgeformten Hohlprofils (7) über seine Längserstreckung in dem Torsionsbereich (3) mittles eines zweiten Schwertes (11) unter Verringerung der Querschnittsfläche des umgeformten Hohlprofils (7) im Torsionsbereich,
i) Entfernen des zweiten Schwertes (11) und der zweiten Dorne (9, 10) und
j) Entnahme des weiter umgeformten Hohlprofils (12).

2. Verfahren nach Anspruch 1, **dadurch gekennzeichnet, dass** das Verformen des umgeformten Hohlprofils (7) derart erfolgt, dass das umgeformte Hohlprofil (7) im Bereich der zweiten Dorne (9, 10) an deren Verjüngung anliegt.

3. Verfahren nach einem der vorhergehenden Ansprüche, **dadurch gekennzeichnet, dass** ein im Querschnitt rundes, ovales beziehungsweise veränderliches oder dergleichen geschlossenes rohrförmiges Hohlprofil (1) als Ausgangsprofil verwendet wird.

4. Verfahren nach einem der vorhergehenden Ansprüche, **dadurch gekennzeichnet, dass** rohrförmigen Hohlprofil (1) zu einem im Querschnitt V-förmig, U-förmig oder dergleichen geformten Profil umgeformt wird.

5. Verfahren nach einem der vorhergehenden Ansprüche, **dadurch gekennzeichnet, dass** erste und/oder zweite Dorne (4, 5; 9, 10) verwendet werden, die zumindest Abschnittsweise mit Sicken versehen sind, die vorzugsweise mit entsprechenden Vorsprüngen der Schwerter (6, 11) beziehungsweise der Verformungsmatrizen (2, 8) korrespondieren.

6. Verfahren nach einem der vorhergehenden Ansprüche, **dadurch gekennzeichnet, dass** erste und/oder zweite Verformungsmatrizen (2, 8) verwendet werden, die als Untergesenk ausgebildet sind, wobei vorzugsweise die erste und zweite Verformungsmatrize (2, 8) gleich ausgebildet sind.

7. Verfahren nach einem der vorhergehenden Ansprüche, **dadurch gekennzeichnet, dass** die ersten Dorne (4, 5) nach dem Einbringen in das rohrförmigen Hohlprofil (1) sich bis zu einem Drittel, vorzugsweise bis zur Mitte des rohrförmigen Hohlprofils (1).

8. Verfahren nach einem der vorhergehenden Ansprüche, **dadurch gekennzeichnet, dass** erste und zweite Schwerter (4, 5; 9, 10) verwendet werden, die gleich ausgebildet sind.

9. Verfahren nach einem der vorhergehenden Ansprüche, **dadurch gekennzeichnet, dass** Bereiche des umgeformten Hohlprofils (7), welche beim weiteren Verformen selbst keine oder nur eine geringe weitere Verformung erfahren, durch Nachführelemente (16) nach geführt werden.

## Claims

1. Method for producing a torsional profile from a tubular hollow profile (1), the torsional profile being provided, over its entire length, with spaced-apart walls, having the following method steps:
a) placing the tubular hollow profile (1) into a first deformation die (2),
b) positioning the ends of the tubular hollow profile (1) in the first deformation die (2) by means of in each case one tapering first mandrel (4, 5) which extends into a torsional region (3),
c) positioning the tubular hollow profile (1) over its longitudinal extent in the first deformation die (2),
d) deforming the tubular hollow profile (2) over its longitudinal extent in the torsional region (3) by means of a first punch (6), with a reduction in the tube cross-sectional area in the torsional region (3),
e) removing the first punch (6) and the first mandrels (4, 5),
f) fixing the ends of the reshaped hollow profile (7) in the deformation die (8) by means of in each case one tapering second mandrel (9, 10) which extends as far as the torsional region (3),
g) fixing the reshaped hollow profile (7) over its longitudinal extent in the second deformation die (8),
h) deforming the reshaped hollow profile (7) over its longitudinal extent in the torsional region (3) by means of a second punch (11), with a reduction in the cross-sectional area of the reshaped hollow profile (7) in the torsional region,
i) removing the second punch (11) and the second mandrels (9, 10) and
j) removing the further-reshaped hollow profile (12).

2. Method according to Claim 1, **characterized in that** the deformation of the reshaped hollow profile (7) is performed such that, in the region of the second mandrels (9, 10), the reshaped hollow profile (7) bears against the taper thereof.

3. Method according to one of the preceding claims, **characterized in that**, as a starting profile, use is made of a tubular hollow profile (1) which is of circular, oval or variable or similar closed cross section.

4. Method according to one of the preceding claims, **characterized in that** the tubular hollow profile (1) is deformed so as to form a profile which is V-shaped, U-shaped or similarly shaped in cross section.

5. Method according to one of the preceding claims, **characterized in that** first and/or second mandrels (4, 5; 9, 10) are used which are equipped, at least in sections, with beads which preferably correspond to corresponding projections of the punches (6, 11) and/or of the deformation dies (2, 8).

6. Method according to one of the preceding claims, **characterized in that** first and/or second deformation dies (2, 8) are used which are in the form of bottom dies, the first and second deformation dies (2, 8) preferably being of identical form.

7. Method according to one of the preceding claims, **characterized in that** the first mandrels (4, 5), after being inserted into the tubular hollow profile (1), over up to one third, preferably as far as the middle, of the tubular hollow profile (1).

8. Method according to one of the preceding claims, **characterized in that** first and second punches (4, 5; 9, 10) are used which are of identical form.

9. Method according to one of the preceding claims, **characterized in that** regions of the reshaped hollow profile (7) which, during the further deformation, undergo no further deformation or only a small amount of further deformation are provided with readjusting guidance by way of readjusting guide elements (16).

## Revendications

1. Procédé de fabrication d'un profilé de torsion à partir d'un profilé creux (1), le profilé de torsion étant pourvu sur toute sa longueur de parois espacées, comprenant les étapes de procédé suivantes :
a) insertion du profilé creux tubulaire (1) dans une première matrice de déformation (2),
b) positionnement par un côté d'extrémité du profilé creux tubulaire (1) dans la première matrice de déformation (2) au moyen d'un premier mandrin respectif (4, 5) se rétrécissant et s'étendant dans une région de torsion (3),
c) positionnement du profilé creux tubulaire (1) sur toute son étendue longitudinale dans la première matrice de déformation (2),
d) déformation du profilé creux tubulaire (2) sur son étendue longitudinale dans la région de torsion (3) au moyen d'une première lame (6) par réduction de la surface en section transversale du tube dans la région de torsion (3),
e) enlèvement de la première lame (6) et des premiers mandrins (4, 5),
f) fixation par un côté d'extrémité du profilé creux mis en forme (7) dans la deuxième matrice de déformation (8) au moyen d'un deuxième mandrin respectif (9, 10) se rétrécissant et s'étendant jusqu'à la région de torsion (3),
g) fixation du profilé creux mis en forme (7) sur son étendue longitudinale dans la deuxième matrice de déformation (8),
h) déformation du profilé creux mis en forme (7) sur son étendue longitudinale dans la région de torsion (3) au moyen d'une deuxième lame (11) par réduction de la surface en section transversale du profilé creux mis en forme (7) dans la région de torsion,
i) enlèvement de la deuxième lame (11) et des deuxièmes mandrins (9, 10) et
j) enlèvement du profilé creux davantage mis en forme (12).

2. Procédé selon la revendication 1, **caractérisé en ce que** la déformation du profilé creux mis en forme (7) s'effectue de telle sorte que le profilé creux mis en forme (7) s'applique dans la région des deuxièmes mandrins (9, 10) au niveau de leur rétrécissement.

3. Procédé selon l'une quelconque des revendications précédentes, **caractérisé en ce qu'**un profilé creux tubulaire fermé (1) de section transversale circulaire, ovale ou variable ou similaire est utilisé en tant que profilé de départ.

4. Procédé selon l'une quelconque des revendications précédentes, **caractérisé en ce que** le profilé creux tubulaire (1) est mis en forme en un profilé de section transversale en forme de V, en forme de U, ou de forme similaire.

5. Procédé selon l'une quelconque des revendications précédentes, **caractérisé en ce que** des premiers et/ou deuxièmes mandrins (4, 5 ; 9, 10) sont utilisés, lesquels sont pourvus au moins en partie de moulures qui correspondent de préférence avec des saillies correspondantes des lames (6, 11) ou des matrices de déformation (2, 8).

6. Procédé selon l'une quelconque des revendications précédentes, **caractérisé en ce que** des première et/ou deuxième matrices de déformation (2, 8) sont utilisées, lesquelles sont réalisées sous forme de matrice inférieure, la première et la deuxième matrice de déformation (2, 8) étant de préférence réalisées de manière identique.

7. Procédé selon l'une quelconque des revendications précédentes, **caractérisé en ce que** les premiers mandrins (4, 5), après l'introduction dans le profilé creux tubulaire (1) jusqu'à un tiers, de préférence jusqu'au milieu du profilé creux tubulaire (1).

8. Procédé selon l'une quelconque des revendications précédentes, **caractérisé en ce que** l'on utilise des première et deuxième lames (4, 5 ; 9, 10) qui sont réalisées de manière identique.

9. Procédé selon l'une quelconque des revendications précédentes, **caractérisé en ce que** des régions du profilé creux mis en forme (7) qui ne subissent elles-mêmes aucune déformation supplémentaire ou seulement une faible déformation supplémentaire lors de la déformation ultérieure, sont suivies par des éléments de suivi (16).
